# EUROPÄISCHE PATENTANMELDUNG

(11) **EP 0 618 557 A1**
(43) Veröffentlichungstag der Anmeldung: **05.10.1994**
(21) Anmeldenummer: 93120188.3
(22) Anmeldetag: 15.12.1993
(51) Int. Cl.: G08G 1/0967

(54) **Einrichtung zur Informationsübertragung im Kraftfahrzeugverkehr**

(30) Priorität: 31.03.1993 DE 4310531
(71) Anmelder: PREH-WERKE GmbH & Co. KG, 97615 Bad Neustadt a.d. Saale (DE)
(72) Erfinder: Brüggemann, Ulrich, Dipl.-Ing., D-97618 Heustreu (DE)

(57) **Zusammenfassung**

Bei einer Einrichtung zur Informationsübertragung im Kraftfahrzeugverkehr zwischen einem fahrbahnnahen, ortsfesten Senderbaustein und einem im Fahrzeug angeordneteten Empfänger strahlt der Senderbaustein eine kodierte Kennungsinformation ab und der Empfänger eines am Senderbaustein vorbeifahrenden Fahrzeugs zeigt die Kennungsinformation im Fahrzeug an. Um bei einfacher Energieversorgung des Senderbausteins und kleinem Bauaufwand für diesen, Abschirmmaßnahmen überflüssig zu machen, ist der Senderbaustein (1) in den Fahrbahnbelag (12) eingebaut. Die zur Abstrahlung der Kennungsinformation nötige Energie empfängt der Senderbaustein (1) vom ihn überfahrenden Fahrzeug (13). Der Empfänger (4,15,16) weist eine im Bodenbereich des Fahrzeugs (13) angeordnete Antennenanordnung (14) auf, die die für den Senderbaustein (1) nötige Sendeenergie auf diesen überträgt und die vom Senderbaustein (1) abgestrahlte Kennungsinformation empfängt.

## Beschreibung

Die Erfindung betrifft eine Einrichtung zur Informationsübertragung im Kraftfahrzeugverkehr mit den Merkmalen des Oberbegriffs des Anspruches 1.

In der DE 36 36 258 A1 ist ein Informationssystem für fahrbahnbenutzende Fahrzeuge beschrieben. Bei diesen sollen dem Fahrer fahrbahngebundene Informationen, beispielsweise Geschwindigkeitsbegrenzungen, während der diesbezüglichen Strecke im Fahrzeuginnern deutlich vor Augen geführt werden. Hierfür sind bei dem betreffenden Verkehrszeichen Sender angeordnet, deren Signale das vorbeifahrende Fahrzeug erfaßt und auswertet. Nachteilig ist bei solchen Sendern, daß sie eine eigene Energieversorgung benötigen. Dies macht solche Sender wartungsbedürftig.

In der DE 39 11 916 A1 ist ein Verfahren zur Erkennung von Verkehrszeichen beschrieben. Die dortige Einrichtung arbeitet mit einem Sender und einem Zeichenkennungsgeber. Beide werden durch einen Solargenerator mit Laderegler und Pufferbatterie mit Strom versorgt.

Zusätzlich zum Solargenerator kann ein Windgenerator vorgesehen sein. Eine solche Einrichtung ist dadurch aufwendig. Außerdem sind bauliche Abschirmmaßnahmen nötig, um das Sendersignal nur einem Fahrzeug zuzuleiten.

In der EP 0 521 846 A1 ist ein drahtloses Anzeigesystem für Fahrzeuge beschrieben. Auch dort ist für die Sender eine eigene Stromversorgung vorgesehen. Außerdem ist eine Abschirmung gegenüber anderen Fahrzeugen nötig.

In der Firmenschrift AEG, Elektronische Identifikation, sind Transponder und zugeordnete Lesegeräte beschrieben. Bei diesen werden Objekte, in die der Transponder eingebaut ist, an einem Lesegerät vorbeigeführt, um das Objekt zu identifizieren.

In der DE 40 03 410 C2 sind Transponder zur Kennzeichnung von Tieren, zur Produktionsautomation, für den bargeldlosen Zahlungsverkehr und für die Kraftfahrzeugkennzeichnung erwähnt.

Nach dem Stand der Technik sind solche Transponder in den nichtstationären Teil der Informationsübertragungsstrecke eingebaut.

Aufgabe der Erfindung ist es, eine Einrichtung der eingangs genannten Art vorzuschlagen, bei der die Energieversorgung des Senderbausteins einfach ist, um den Bauaufwand für den Senderbaustein kleinzuhalten, und bei der Maßnahmen zur Abschirmung des Sendesignals überflüssig sind.

Erfindungsgemäß ist obige Aufgabe bei einer Einrichtung der eingangs genannten Art durch die kennzeichnenden Merkmale des Anspruchs 1 gelöst.

Durch den Einbau des Senderbausteins in den Fahrbahnbelag ist erreicht, daß die Antennenanordnung des ihn überfahrenden Fahrzeugs den Senderbaustein überdeckt. Dadurch treten keine störenden Reflektionen des Sendesignals an Gebäuden oder anderen, beispielsweise auf der Gegenfahrbahn, vorbeifahrenden Fahrzeugen oder an Leitplanken auf. Besondere Maßnahmen zur gerichteten Abstrahlung des Sendesignals erübrigen sich. Es können auch keine Funkschatten auftreten, die den Empfang des Sendesignals beeinträchtigen könnten.

Der festeingebaute Senderbaustein empfängt die notwendige Energie vom ihn überfahrenden Fahrzeug und sendet Informationen an dieses. Das Fahrzeug sendet die Energie und empfängt die Informationen.

Als Senderbaustein ist ein Transponder vorgesehen.
Dieser ist ein stabiles Bauteil, das sich einfach in den Fahrbahnbelag einbauen läßt, ohne an eine Energieversorgung angeschlossen werden zu müssen. Solche Transponder sind vergleichsweise billig und eignen sich deshalb zum Einbau in großer Zahl bei Verkehrszeichen. In ihnen lassen sich die verschiedensten Kennungsinformationen fest oder umprogrammierbar speichern.

Vorteilhafte Ausgestaltungen der Erfindung ergeben sich aus den Unteransprüchen und der folgenden Beschreibung von Ausführungsbeispielen. In der Zeichnung zeigen:

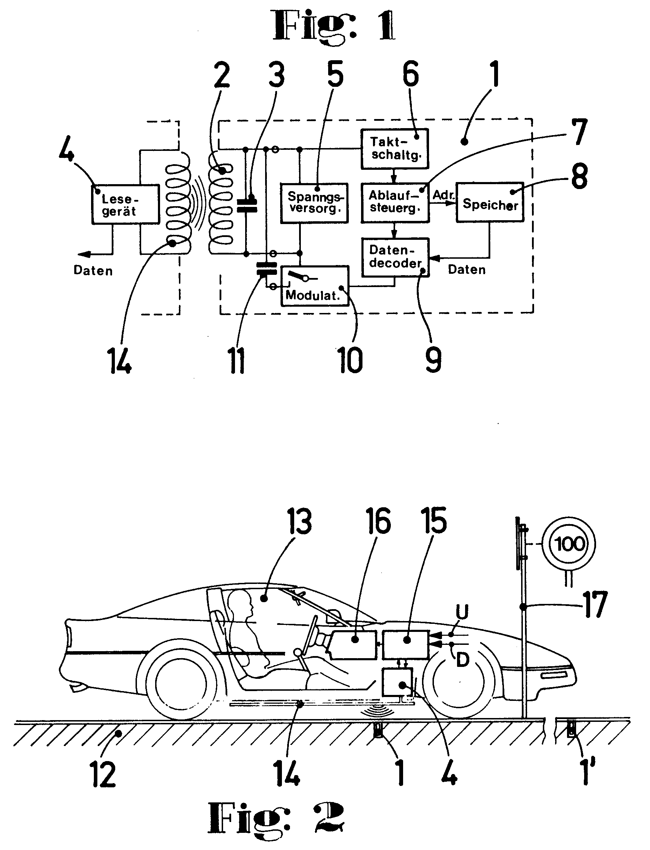

- Figur 1: einen Transponder schematisch,
- Figur 2: einen Transponder bei einem Verkehrzeichen in den Fahrbahnbelag eingesetzt,
- Figur 3a: einen Transponder im Fahrbahnbelag als Abstandswarnsystem,
- Figur 3b: den um einen Zähler erweiterten Transponder,
- Figur 4a: einen Transponder zur Anzeige des Straßenzustands,
- Figur 4b: den Transponder mit Temperatursensor und Feuchtesensor.

Ein Transponder (1) weist eine Sende-Empfangsspule (2) mit parallelgeschaltetem Kondensator (3) auf. Die Resonanzfrequenz dieses Schwingkreises ist auf die Sendefrequenz eines Lesegerätes (4) abgestimmt. Diese Sendefrequenz liegt nach den postalischen Bestimmungen der Bundesrepublik Deutschland unter 150 kHz, in anderen Ländern auch darüber.

Im Transponder (1) ist eine Spannungsversorgungsschaltung (5) angeordnet, die über die Spule (2) aus der Sendeenergie des Lesegeräts (4) gespeist wird und die gesamte Schaltung des Transponders (1) mit Energie versorgt. Der Transponder (1) ist mit einer Taktschaltung (6) und einer Ablaufsteuerung (7) versehen, die einen Speicher (8) adressiert. Der Speicher (8) kann ein ROM, PROM oder ein EEPROM sein. In ihm sind die jeweils erforderlichen Informationsdaten abgelegt. Der Speicher (8) ist über einen Datendekoder (9) und einen Modulator (10) sowie einen Kondensator (11) an die Sende-Empfangsspule angeschlossen. Der aus Spule (2) und Kondensator (3) bestehende Schwingkreis des Transponders (1) wird durch den parallel zugeschalteten Kondensator (11) verstimmt. Das Lesegerät (4) erkennt die veränderte Resonanz des Schwingkreises (2,3) und übernimmt die vom Transponder (1) gesendeten Daten des Speichers (8).

Alternativ kann der Transponder mit zwei Schwingkreises ausgestattet sein mit unterschiedlicher Resonanzfrequenz. Bei einem solchen Transponder unterscheidet sich die Empfangsfrequenz, mit der Energie vom Lesegerät auf den Transponder übertragen wird, von der Sendefrequenz des Transponders.

Für die beschriebene Einrichtung zur Informationsübertragung können noch weitere, an sich bekannte Transponder verwendet werden.

Der Transponder (1) wird in den Fahrbahnbelag (12) einer Straße eingebaut. Aufgrund der kleinen Abmessungen des Transponders (1) genügt hierfür eine einfache Bohrung im Fahrbahnbelag (12). Der Transponder (1) wird an einer Stelle in den Fahrbahnbelag (12) eingesetzt, die gewöhnlich unter einem den Fahrbahnbelag (12) befahrenden Fahrzeug (13) liegt, so daß der Transponder (1) vom Fahrzeug (13) überfahren wird. Bei breiten bzw. mehrspurigen Fahrbahnen lassen sich mehrere Transponder mit gleicher Information in Fahrtrichtung versetzt nebeneinander in den Fahrbahnbelag einbauen. Die versetzte Anordnung verhindert das gleichzeitige Überfahren mehrerer Transponder.

Am Boden des Fahrzeugs (13) ist eine Rahmenantenne (14) angeordnet, die an das im Fahrzeug (13) untergebrachte Lesegerät (4) angeschlossen ist.

Die Rahmenantenne (14) hat beispielsweise eine Länge in Fahrtrichtung von etwa 1,5 m. Bei einer maximalen Fahrzeuggeschwindigkeit von 250 km/h, d.h. 70 m/s, befindet sich der Transponder (1) etwa 21 ms im Bereich der Rahmenantenne (14). Geht man davon aus, daß der Speicher (8) auf wenigstens 32 Bytes oder für ein aufwendigeres System auf 64 Bytes ausgelegt ist und mit jeder zweiten Vollwelle der Frequenz des Übertragungssystems ein Bit übertragen wird, dann ergibt sich eine notwendige Transponder-Sendefrequenz größer als 50 kHz. Dies liegt im Rahmen der bekannten Transponder, bei denen die Transponder-Sendefrequenz etwa 64 kHz und die Lesegerät-Sendefrequenz etwa 128 kHz beträgt.

Das im Fahrzeug (13) angeordnete Lesegerät (4) ist mit einer Auswerteschaltung (15) verbunden, die eine Anzeigeeinrichtung (16) steuert. An der Auswerteschaltung (15) liegt auch die elektrische Spannung (U) der Spannungsversorgung des Fahrzeugs (13). Über das Lesegerät (4) und die Rahmenantenne (14) wird Energie aus der Spannungsversorgung des Fahrzeugs auf den Transponder übertragen.

Außerdem liegen an der Auswerteschaltung (15) Fahrzeugdaten (D), wie beispielsweise Wegsignale, wie Fahrzeuggeschwindigkeit und Lenkausschläge, Blinkerbetätigungssignale, dem Fahrzeug charakteristische Daten (PKW oder LKW) oder Navigationsdaten zur Fahrstreckenbestimmung und gegebenenfalls andere Daten.

Nach dem Beispiel der Figur 2 ist der Transponder (1) nahe einem geschwindigkeitsbeschränkenden Verkehrzeichen (17) in den Fahrbahnbelag (12) eingebaut. Im Speicher (8) des Transponders (1) ist die dem Verkehrszeichen (17) entsprechende Information abgelegt. Überfährt das Fahrzeug (13) mit seiner Rahmenantenne (14) den Transponder (1), dann wird über die Rahmenantenne (14) Energie auf den Transponder (1) übertragen, so daß dieser aktiviert wird und seine Speicherinformation aussendet. Diese empfängt die Rahmenantenne (14), so daß über das Lesegerät (4) und die Auswerteschaltung (15) an der Anzeigeeinrichtung (16) die Information des Verkehrszeichens (17) angezeigt wird. Vorzugsweise bleibt diese Anzeige aufrechterhalten, bis das Fahrzeug (13) einen weiteren Transponder (1') überfährt, welcher bei einem die Geschwindigkeitsbegrenzung aufhebenden Verkehrzeichen angeordnet ist. Über diesen Transponder (1') wird dann die Anzeige der Geschwindigkeitsbegrenzung gelöscht. Der Fahrer kann damit während der gesamten Gültigkeit der Geschwindigkeitsbegrenzung diese an der Anzeigeeinrichtung (16) sehen.

Um den Fahrer vor Reizüberflutung durch Anzeigen von an sich überflüssigen Informationen zu schützen, kann vorgesehen sein, daß die Auswerteschaltung die jeweilige Fahrgeschwindigkeit erfaßt und es nur zu einer Anzeige kommt, wenn die vorgeschriebene Geschwindigkeit überschritten wird.

Ist das Verkehrzeichen (17) ein Überholverbotszeichen, kann dieses wie ein Geschwindigkeitsbegrenzungszeichen während seiner Gültigkeit ständig angezeigt werden. Es ist jedoch auch möglich, die Gültigkeit des Überholverbotszeichens erst dann anzuzeigen, wenn der Blinker in Überholrichtung (nach links) betätigt wird. Als weiteres Kriterium für den Überholvorgang kann dabei ausgewertet werden, daß die Fahrgeschwindigkeit nicht reduziert wird.

Entsprechend kann ein eine abbiegende Fahrtrichtung vorschreibendes Verkehrzeichen immer oder dann angezeigt werden, wenn der Ausschlag der Lenkung und/oder die Blinkerstellung nicht der vorgeschriebenen Fahrtrichtung entspricht.

Die Anzeige eines mit Entfernungsangaben versehenen Verkehrszeichens kann z.B. auch durch Wegsignale des Kraftfahrzeuges gesteuert werden.

Bei Verkehrszeichen, die nur für spezielle Fahrzeuge beispielsweise LKW, nicht PKW, gelten oder Höhenbeschränkungen oder Gewichtsbeschränkungen bedeuten, kann dieser Geltungsbereich bzw. Beschränkungsbereich in den Speicher (8) abgelegt sein. Außerdem werden der Auswerteschaltung (15) dann die fahrzeugspezifischen Daten zugeführt. In diesem Fall wird beispielsweise an der Anzeigeeinrichtung (16) eines PKWs nicht die für einen LKW geltende Geschwindigkeit angezeigt. Entsprechend werden Höhenbeschränkungen und Gewichtsbeschränkungen nicht bei einem Fahrzeug angezeigt, das ohnehin nicht die Beschränkungsgrenzen erreicht.

Durch diese Maßnahmen ist erreicht, daß der Fahrer nicht durch für ihn überflüssige Informationen abgelenkt wird.

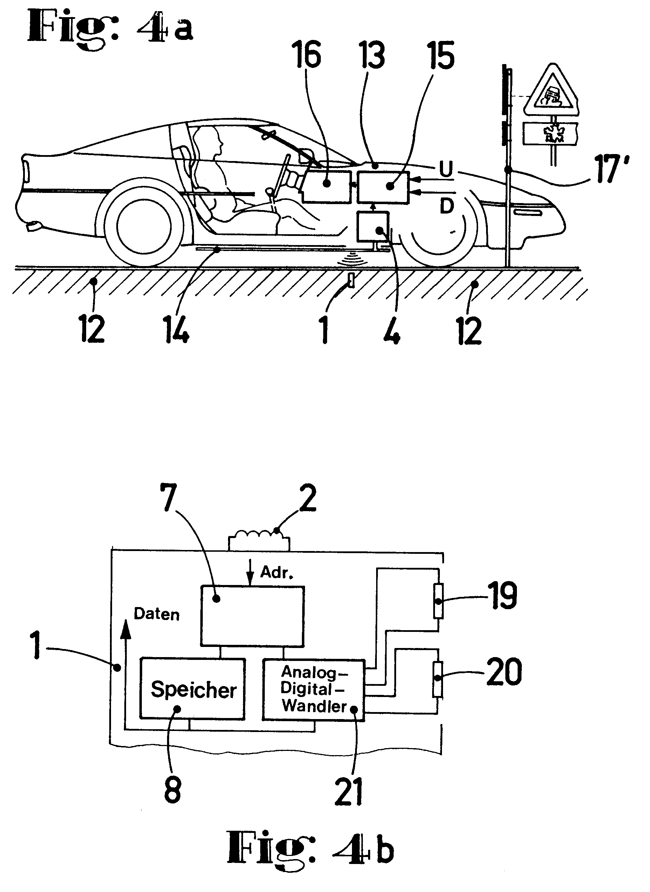

Es sind auch Verkehrszeichen im Gebrauch, die nur bei bestimmten Bedingungen gelten, wie beispielsweise Geschwindigkeitsbegrenzungen "nur bei Nässe". Bei der beschriebenen Einrichtung kann auch eine Übersetzung dieser Zusatzinformation in eine andere Sprache als Deutsch vorgesehen sein. Der dementsprechende Katalog zur Übersetzung der Zusatzinformation wird vorzugsweise in der Auswerteschaltung (15) vorgesehen. Dies erleichtert fremdsprachigen Fahrern das Verstehen der Zusatzinformation. Es ist jedoch auch möglich, solche nur bei einschränkenden Zusatzbedingungen, beispielsweise "bei Nässe" geltende Verkehrszeichen nur dann anzuzeigen, wenn diese Umgebungsbedingungen tatsächlich vorliegen. Der Transponder (1) kann dann mit einem entsprechenden Fühler versehen sein, der den tatsächlich bedingten Zustand der Fahrbahn erfaßt, ähnlich wie dies weiter unten anhand der Figur 4 beschrieben ist.

Bei einer Änderung der Verkehrszeichen können die zugeordneten Transponder durch Zerstörung unwirksam gemacht werden, weil dies im Regelfall einfacher ist, als die Transponder aus dem Fahrbahnbelag auszubauen. Bei umprogrammierbaren Transpondern lassen sich die Daten des Speichers (8) löschen bzw. entsprechend dem neuen Verkehrzeichen kontaktlos in den Speicher (8) eingeben. Die zuständigen Straßenmeistereien werden Lesegeräte zur Verfügung halten, mit denen die Funktion der installierten Transponder kontrollierbar ist. Sie werden Schreib-Lesegeräte zur Verfügung haben, mit denen umprogrammierbare Transponder an eine neue Verkehrssituation anpaßbar sind.

Es sind auch Wechselverkehrszeichen im Betrieb, die je nach der Verkehrssituation von einer Verkehrsleitzentrale aus gesteuert werden. Um die solchen Wechselverkehrszeichen zugeordneten Transponder diesen anzupassen, sind die Transponder über Verbindungskabel oder drahtlos umprogrammierbar.

Um ein Fahren eines Fahrzeugs entgegen der vorgeschriebenen Fahrtrichtung, beispielsweise bei Einbahnstraßen oder Autobahneinfahrten zur Anzeige zu bringen, wird ein Tansponderpaar in Fahrtrichtung hintereinander in den Fahrbahnbelag eingebaut, wobei die beiden Transponder des Paares beim Überfahren unterschiedliche Signale abgeben und die Auswerteschaltung (15) erfaßt, ob erst der erste Transponder und dann der zweite Transponder oder umgekehrt überfahren wird. Beim Überfahren des Transponderpaares in falscher Richtung erscheint an der Anzeigeeinrichtung (16) ein optisches und/oder akustisches Warnsignal. Es kann auch in Fahrtrichtung ein zweites Transponderpaar vorgesehen sein. Wenn dann auch noch dieses überfahren wird, kann über die Auswerteschaltung (15) ein Eingriff in Motorelektronik des Fahrzeugs (13) erfolgen, was zu einem Abstellen des Motors führen kann, so daß das Fahrzeug (13) nicht mehr in falscher Richtung weiterfahren kann. Es kann dann nur noch im Rückwärtsgang aus dem Gefahrenbereich gefahren werden. Durch richtiges Überfahren der Transponder kann der vorherige Zustand gelöscht werden.

Gleichzeitig mit der an der Anzeigeeinrichtung (16) für den Fahrer ersichtlichen Warnung des Falschfahrens kann auch die Warnblinkanlage und/oder die Beleuchtung des Fahrzeugs von der Auswerteschaltung (15) eingeschaltet werden, um andere Verkehrsteilnehmer zu warnen.

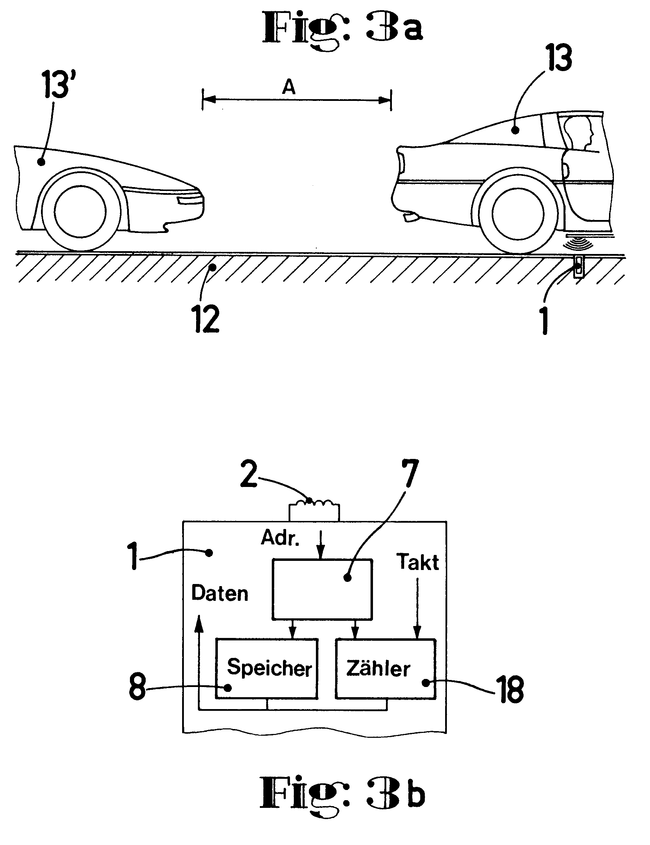

Unabhängig von der zusätzlich zu den beschriebenen Funktionen kann der in den Fahrbahnbelag (12) eingesetzte Transponder (1) auch als Abstandswarneinrichtung verwendet werden, um in einem nachfahrenden Fahrzeug (13') den Abstand (A) zu einem vorausfahrenden Fahrzeug (13) (vgl. Fig. 3a) anzuzeigen. Der Transponder (1) ist hierfür mit einem vor der Taktschaltung (6) gesteuerten Zähler (18) ausgestattet (vgl. Fig. 3b). Verläßt die Rahmenantenne (14) des vorausfahrenden Fahrzeugs (13) den Transponder (1), dann beginnt der Zähler (18) zu zählen. Er ist dabei aus der Spannungsversorgungsschaltung (5) gespeist, die eine Restenergie aus der Übertragung vom vorausfahrenden Fahrzeug (13) speichert. Überfährt dann das nachfolgende Fahrzeug (13') den Transponder (1), wird der dem Abstand (A) entsprechende Zählerstand über dessen Rahmenantenne auf dessen Lesegerät übertragen. Die Auswerteschaltung des nachfahrenden Fahrzeugs (13') errechnet aus dem übertragenden Zählerstand den Abstand (A) und kann ihn gegebenenfalls in Bezug zur gefahrenen Geschwindigkeit setzen. An der Anzeigeeinrichtung (16) wird dann der Abstand und/oder das Unterschreiten eines geschwindigkeitsabhängigen Minimalabstands angezeigt.

Die beschriebene Einrichtung zur Informationsübertragung kann auch zur Anzeige des Straßenzustands verwendet werden. Beispielsweise weist hierfür der Transponder (1), der insbesondere bei einem auf Glättebildung hinweisenden Verkehrzeichen (17') angeordnet sein kann (vgl. Fig. 4a), einen Temperatursensor (19) und einen Feuchtesensor (20) auf, die bei der Oberfläche des Fahrbahnbelags (12) angeordnet sind und über einen Analog/Digital-Wandler (21) an die Schaltung des Transponders (1) angekoppelt sind. Ist die Fahrbahn naß oder vereist, dann empfängt das Lesegerät (4) vom Transponder (1) eine entsprechende Warninformation, die als Warnsignal an der Anzeigeeinrichtung (16) angezeigt wird.

Mit anderen mit dem Transponder (1) verbundenen Sensoren oder im Speicher (8) des Transponders (1) gespeicherten Daten ist es auch möglich, die Rauhigkeit der Fahrbahn, einen Kurvenradius und/oder eine Kurvenneigung an der Anzeigeeinrichtung (16) zur Anzeige zu bringen und/oder direkt auf die Fahrzeugsteuerung einzuwirken. Beispielsweise ist es auch möglich, bei Fahrzeugen, die eine Fahrwerksregelung aufweisen, auf diese einzuwirken.

Die beschriebenen, in den Fahrbahnbelag (12) eingesetzten Transponder (1) eignen sich auch für den Aufbau eines Navigationssystems für Kraftfahrzeuge, bei dem im Kraftfahrzeug über eine Eingabeeinrichtung die vorgesehene Fahrtroute bzw. das gewünschte Fahrtziel gespeichert wird. In den jeweiligen Transpondern können in diesem Fall Wegweiseinformationen und/oder Straßennamen gespeichert sein, die die Navigationseinrichtung des vorbeifahrenden Fahrzeugs erfaßt und mit Solldaten vergleicht.

## Patentansprüche

1. Einrichtung zur Informationsübertragung im Kraftfahrzeugverkehr zwischen einem in den Fahrbahnbelag eingebauten Senderbaustein und einem im Fahrzeug angeordneten Empfänger, wobei der Senderbaustein eine kodierte Kennungsinformation abstrahlt und der Empfänger eines den Senderbaustein überfahrenden Fahrzeugs die Kennungsinformation auswertet und der Senderbaustein die zur Abstrahlung der Kennungsinformation nötige Energie vom ihn überfahrenden Fahrzeug empfängt,
dadurch gekennzeichnet,
daß der Senderbaustein ein Transponder (1) ist und an verkehrskritischen Stellen im Fahrbahnbelag untergebracht ist,
daß der Empfänger (4,15,16) eine im Bodenbereich des Fahrzeugs angeordnete Rahmenantenne (14) aufweist, die die für den Transponder (1) nötige Sendeenergie auf diesen überträgt und die vom Transponder (1) abgestrahlte, für das Steuern des Fahrzeugs wesentliche Kennungsinformation empfängt,
und daß eine Auswerteschaltung (15) des Empfängers die empfangene Kennungsinformation auswertet und
eine Anzeigeeinrichtung (16) des Empfängers die ausgewertete Kennungsinformation im Fahrzeug anzeigt.

2. Einrichtung nach Anspruch 1,
dadurch gekennzeichnet,
daß die kodierte Kennungsinformation einem Verkehrszeichen (17) entspricht, das nahe dem Senderbaustein (1) der Fahrbahn zugeordnet ist.

3. Einrichtung nach Anspruch 1 oder 2,
dadurch gekennzeichnet,
daß zwei oder mehrere Senderbausteine (1) mit gleicher Kennungsinformation bezüglich der Fahrtrichtung des Fahrzeugs nebeneinander oder nebeneinander gestaffelt in den Fahrbahnbelag (12) eingebaut sind.

4. Einrichtung nach einem der vorhergehenden Ansprüche,
dadurch gekennzeichnet,
daß wenigstens zwei Senderbausteine (1, 1') mit unterschiedlichen Kennungsinformationen in Fahrtrichtung eines Fahrzeugs (13) hintereinander in den Fahrbahnbelag (12) eingebaut sind.

5. Einrichtung nach Anspruch 4,
dadurch gekennzeichnet,
daß ein in Fahrtrichtung vorausliegender Senderbaustein (1) im Fahrzeug (13) die Anzeige des in Fahrtrichtung zurückliegenden Senderbausteins löscht.

6. Einrichtung nach Anspruch 4 oder 5,
dadurch gekennzeichnet,
daß ein Senderbausteinpaar die Fahrtrichtung des Fahrzeugs (13) vorgibt und der Empfänger bei einer Fahrt in Gegenrichtung ein Alarmsignal auslöst.

7. Einrichtung nach einem der vorhergehenden Ansprüche,
dadurch gekennzeichnet,
daß der Senderbaustein (1) einen umprogrammierbaren Speicher (8) aufweist.

8. Einrichtung nach Anspruch 7,
dadurch gekennzeichnet,
daß das Umprogrammieren in Abhängigkeit von einer Steuerung eines zugeordneten Wechselverkehrzeichens oder mittels eines zusätzlichen Senders erfolgt.

9. Einrichtung nach einem der vorhergehenden Ansprüche,
dadurch gekennzeichnet,
daß der Senderbaustein (1) einen Temperatursensor (19) und/oder einen Feuchtigkeitssensor (20) enthält oder an einem solchen angeschlossen ist, der die Temperatur und/oder Feuchte der Fahrbahn (12) erfaßt.

10. Einrichtung nach einem der vorhergehenden Ansprüche,
dadurch gekennzeichnet,
daß der Senderbaustein (1) einen Zähler (18) aufweist, der nach dem Überfahren durch ein vorausfahrendes Fahrzeug (13) zu zählen beginnt und daß in einem nachfahrenden Fahrzeug (13') der Zählerstand als Abstand zum vorausfahrenden Fahrzeug ausgewertet wird.

11. Einrichtung nach einem der vorhergehenden Ansprüche,
dadurch gekennzeichnet,
daß im Speicher (8) des Senderbausteines (1) eine Ortskennung abgelegt ist, die ein überfahrendes Fahrzeug (13) in seiner Navigationseinrichtung auszuwerten vermag.
